(19) Europäisches Patentamt
European Patent Office
Office européen des brevets

(11) **EP 3 889 555 B1**

(12) **EUROPEAN PATENT SPECIFICATION**

(45) Date of publication and mention
of the grant of the patent:
**25.10.2023 Bulletin 2023/43**

(21) Application number: **20167416.5**

(22) Date of filing: **31.03.2020**

(51) International Patent Classification (IPC):
**G01F 15/02** *(2006.01)*      **G01F 25/10** *(2022.01)*

(52) Cooperative Patent Classification (CPC):
**G01F 15/024; G01F 25/10**

(54) **FLOW METER CALIBRATION METHOD**

DURCHFLUSSMESSERKALIBRIERVERFAHREN

PROCÉDÉ D'ÉTALONNAGE D'UN DÉBITMÈTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.10.2021 Bulletin 2021/40**

(73) Proprietor: **Apator Powogaz Spolka Akcyjna
62 023 Zerniki (PL)**

(72) Inventors:
• **Zarzynski, Mikolaj
61 - 294 Poznan (PL)**

• **Grabinski, Jakub Krzysztof
60-688 Poznan (PL)**

(74) Representative: **Wroblewski, Marcin Jan
Fert, Jakubiak vel Wojtczak
Wróblewski rzecznicy patentowi
Sp. P. / ul. Gdanska 126/A103
90-520 Lodz (PL)**

(56) References cited:
**EP-A1- 0 326 380    DE-A1-102015 115 761**

**Description**

*Field of the Invention*

The object of the invention is a computer-implemented method for calibrating a flow meter, in particular a heat meter or a water meter.

*Description of Prior Art*

From the German patent application DE102015115761A1, a flow meter calibration method is known in which Reynolds number is calculated for a given flow rate. The Reynolds number is used in the present method to describe heat transfer in the flow meter.

From the international PCT application WO2004048906A2, a method is known for calibrating a flow meter having an array of sensors for determining flow conditions in the pipeline. The method includes a step of calibrating the flow rate by means of a calibration correction function based on one or more parameters that characterise either the sensor system, the pipe, the fluid flowing in the pipe, or a combination thereof. Furthermore, the application discloses a flow meter with a calibration correction function module that meets the above-mentioned functionality.

In turn, from the international PCT application WO2013006090A1, a flow meter is known that can be used to calibrate ultrasonic flow meters for single-phase liquids (gases) used in the oil, gas and other industries. In the first step of calibration, the reference standard sound velocity in a non-flow medium is determined for a given absolute pressure, absolute temperature and its composition (in the case of natural gas). Then, using the similarity criteria for a fully developed turbulent stream and using the meter software, the transition time values for ultrasonic signals along the acoustic paths of a particular meter are found in the flowing liquid medium with a selected value of the average volumetric flow rate in the flow measurement range. Then, based on the obtained transition time (frequency) values, time measurement channels are controlled and adjustment is made for a given meter by means of a sound pulse generator. In the next step, according to the counter registration data (actual volume), the liquid flow rate is measured at a selected point within the measurement range of the average flow rate (volume) in the pipeline. The obtained measurement result is compared with the original calibration data and a correction of meter indications (according to the volume reference standard) is found at a selected point within the measuring range. In the same way a correction is found for the preselected average volume. If the difference between the corrections is in line with the established criteria, a relative correction is made to the meter calculator.

What is more, document DE102015115761A1 relates to Method for on-site calibration of a thermal flow meter in a measurement medium, wherein the thermal flow meter has at least one first sensor element, which is designed as a heater, and at least one second sensor element, which is designed as a temperature sensor, characterized by the following steps: I. Input of at least two different flow rates and/or flow rates for at least two measured different power coefficients for the measuring medium, II. Determination of Reynolds numbers for the respective data pairs from a power coefficient and a flow rate and/or a flow rate assigned to it; III. Determination of temperature-compensated Reynolds numbers from the at least two different performance coefficients using mathematical models to describe an internal heat transfer in the flow meter and an external heat transfer from the flow meter into the measurement medium, including the thermal material properties of the measurement medium; and IV. Creation of a calibration curve by assigning the determined Reynolds numbers from step II to the determined temperature-compensated Reynolds numbers from step III for a respective power coefficient.

EP0 326 380 A1 relates to an instrumental error compensating method which allows for precision measurement and which is provided with a computer which compensates flow-rate errors instantaneously.

In the above methods, the Reynolds number is determined by measuring the set values collected from sensors installed in the measuring instrument. Then, on this basis, a specific flow or metrological correction is estimated using the experimental run between the Reynolds number and the measured value.

Commonly used methods using correction factor arrays do not provide correct correction of a flow meter error when its characteristics differ significantly within a given production population. As a consequence, it causes oversizing of the error of said meter and its indication is incorrect.

Calibration methods are also imperfect with respect to compensation of errors resulting from temperature changes, and thus changes in the density of the measured fluid and its kinematic viscosity. In the production process, for economic reasons, it is most often not possible to calibrate the flow meter at different temperatures and to independently compensate for the error with various factor arrays.

Therefore, it would be expedient to develop a flow meter calibration method that would improve existing solutions and would not have the above drawbacks.

### The Essence of the Invention

The object of the invention is a computer- implemented method for calibrating a flow meter, which includes the following steps: the array of error dependencies $E_{pi}$ is taken as a function of flow rate $V_i$ for temperature $T_1$, where i = (1, 2 ..., n), and then the value of kinematic viscosity $v_1$ for temperature $T_1$ and of kinematic viscosity $v_2$ for temperature $T_2 \neq T_1$ are calculated. In the next step, values of the flow rate array $V_{Ri}$ are calculated, where $V_{Ri} * v_1 = V_i * v_2$, where i = (1, 2 ..., n), and then a corresponding error $E_{pi}$ is assigned to the values of the flow rate calculated in the previous step $V_{Ri} \rightarrow E_{pi}$, obtaining as a result an array of error dependencies $E_{pi}$ as a function of flow rate $V_{Ri}$ for temperature $T_2 \neq T_1$, where i = (1, 2...,n). In the next step, (105) the array of dependencies from the previous step is saved (105) in the memory of the flow meter.

The above allows determination of the error characteristics for the flow meter at a temperature different than the original temperature without physically measuring the error characteristics at that temperature. This results in improved accuracy of the flow meter and a reduction in the time required for its calibration.

Preferably, in the calibration method according to the invention, the array of error dependencies $E_{pi}$ as a function of flow rate $V_i$ is obtained by experimental measurements or by computer simulation. This allows a further improvement in the accuracy of the calibration method and thus in the accuracy of the flow meter calibrated using the method.

Preferably, the values from the array of error dependencies $E_{pi}$ as a function of flow rate $V_{Ri}$ for temperature $T_2 \neq T_1$, where i = (1, 2 ..., n), are further subjected to approximation of error value to flow values $V_i$, obtaining as a result an array of error dependencies $E_{Ri}$ as a function of flow $V_i$. This allows a further improvement in the accuracy of the calibration method and thus in the accuracy of the flow meter calibrated using the method.

Preferably, in the calibration method, after the step of approximation, the error dependency $E_{pi}$ or $E_{Ri}$ as a function of the flow rate $V_i$ or $V_{Ri}$ is corrected for temperature $T_2 \neq T_1$, where i = (1, 2 ..., n), with the use of a factor array obtained experimentally. This allows a further improvement in the accuracy of the calibration method and thus in the accuracy of the flow meter calibrated using the method.

The object of the invention is also a computer program comprising means of program code for performing all steps of the computer-implemented calibration method when said program is running on the computer.

The object of the invention is also a computer-readable medium storing computer-implemented instructions performing all steps of the computer-implemented calibration method implemented on the computer.

The object of the invention is also a computer system for implementing the method according to the invention, comprising a central unit adapted to perform the calibration method, a data bus connected to the central unit and to a memory, a validation test bench with at least one flow meter contained therein comprising a non-volatile memory and an interface for programming the flow meter.

### Advantages of the Invention

The method according to the invention allows increasing the accuracy of the flow meter. Increasing the accuracy of the flow meter is associated with the possibility of calibration thereof at temperatures other than the test temperature (e.g. in the validation process). However, it is not necessary to perform tests at all temperatures because the method provides error calculation and application of a correction for temperatures other than the test temperature (e.g. in the validation process), without making the full measurement of error characteristics of the flow meter.

The calibration method according to the invention is versatile because it can be used unchanged for both mechanical meters with moving elements and static meters, for example in ultrasonic or electromagnetic technology. Thus, it can be used for water meters, heat meters and gas meters.

What is more, the present calibration method treats each flow meter independently. This means that, regardless of the shape of metrological characteristics, it can correct the meter error to a value not exceeding the value of allowable error.

The present method is partly based on the properties of the Reynolds number, and partly on the study of the population of flow meters and the correction factor arrays created on its basis. As a result, the use of several mathematical models allows the choice of a correction set better than when using each of these methods separately.

The calibration method according to the invention allows the simulation of a meter error under any flow rate and temperature conditions other than the initial conditions because the metrological error of the meter is associated with the nature of the flow.

The meter calibration method allows the simulation of a metrological error and the nature of its course on the basis of a test performed using a real meter, as well as the simulation for a virtual meter being in the design phase and constituting a mathematical model of the real meter.

In addition, the present meter calibration algorithm allows obtaining ready correction arrays for individual temperatures, and therefore the calibrated flow meter does not have to perform calculations independently using a local microcontroller, which significantly reduces the consumption of energy which can come from a very limited source in the form of a primary or secondary battery.

### *Description of Figures*

The object of the invention is shown in embodiments in a drawing, in which:

Fig. 1 schematically shows a flow meter calibration method according to the invention;

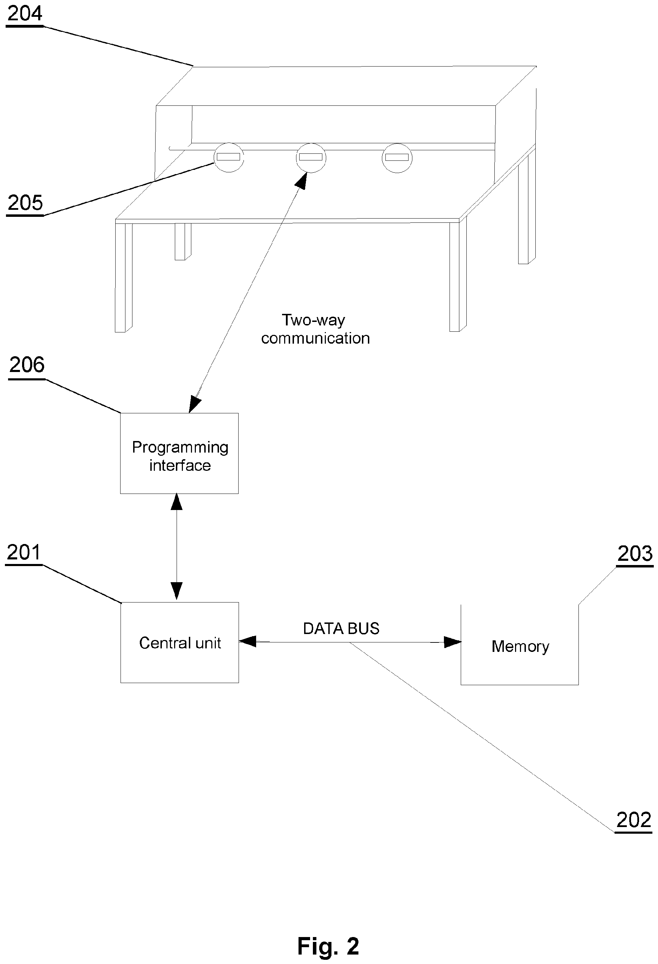

Fig. 2 shows a diagram of an exemplary system for implementing the flow meter calibration method according to the invention;

Fig. 3 shows the characteristics of an exemplary heat meter before calibration by the method according to the invention: 1 - actual test for temperature $T_1$ = 50 °C, 2 - actual test for temperature $T_2$ = 13 °C;

Fig. 4 shows the characteristics of an exemplary heat meter after calibration by the method according to the invention according to its first embodiment: 1 - actual test for temperature $T_1$ = 50 °C, 2 - actual test for temperature $T_2$ = 13 °C, 3 - characteristics calculated for temperature $T_2$ = 13 °C, taking into account changes in viscosity, approximation and factor correction.

Fig. 5 shows the characteristics of an exemplary heat meter after calibration by the method according to the invention according to its second embodiment: 1 - actual test for temperature $T_1$ = 50 °C, 2 - actual test for temperature $T_2$ = 13 °C, 3 - characteristics calculated for temperature $T_2$ = 13 °C, taking into account changes in viscosity and approximation;

Fig. 6 shows the characteristics of an exemplary heat meter after calibration by the method according to the invention according to its third embodiment: 1 - actual test for temperature $T_1$ = 50 °C, 2 - actual test for temperature $T_2$ = 13 °C, 3 - characteristics calculated for temperature $T_2$ = 13 °C, taking into account changes in viscosity;

### Notation and nomenclature

Some parts of the detailed description which is given below are presented as part of procedures, steps of data processing, or other symbolic representations of operations on binary data that can be performed in the computer memory. Therefore, logical steps are performed by the computer, which requires physical manipulation of physical quantities. Typically, these values take the form of electrical or magnetic signals that are suitable for storage, transmission, connection, comparison or other ways of manipulation of data in a computer system. Due to widespread use, these data are referred to as signals, time courses, bits, packets, messages, values, elements, symbols, signs, terms, numbers and the like. In addition, all of these terms, or the like, should be identified with their corresponding physical quantities, and are merely convenient terms for these physical quantities. Terms such as "processing" or "creating", or "sending", or "performing", or "determining", or "detecting", or "receiving", or "selecting", or "calculating", or "generating", or similar, refer to activities and processes of a computer system that manipulates and transforms data represented as physical (electronic) quantities in registers and computer memories into other data similarly represented as physical quantities in memories or registers, or other information storages. The computer-readable medium (memory) as defined herein may typically be non-volatile and/or include a non-volatile device. In this context, the non-volatile storage medium may include a device which may be material, which means that the device has a specific physical form, although the device may change its physical state. Thus, for example, the term non-volatile refers to the device remaining material, although it changes its state.

In addition, data regarding flow, temperature or error, or other quantities, processed by the calibration method described, refer each time to physical measurement data representing the actual operating environment of the flow meter or the flow meter itself. In the case of simulation data, there is actually a flow meter statistically corresponding to this data.

### *Description of the Invention*

### *Flow meter calibration method*

### *First embodiment of the flow meter calibration method*

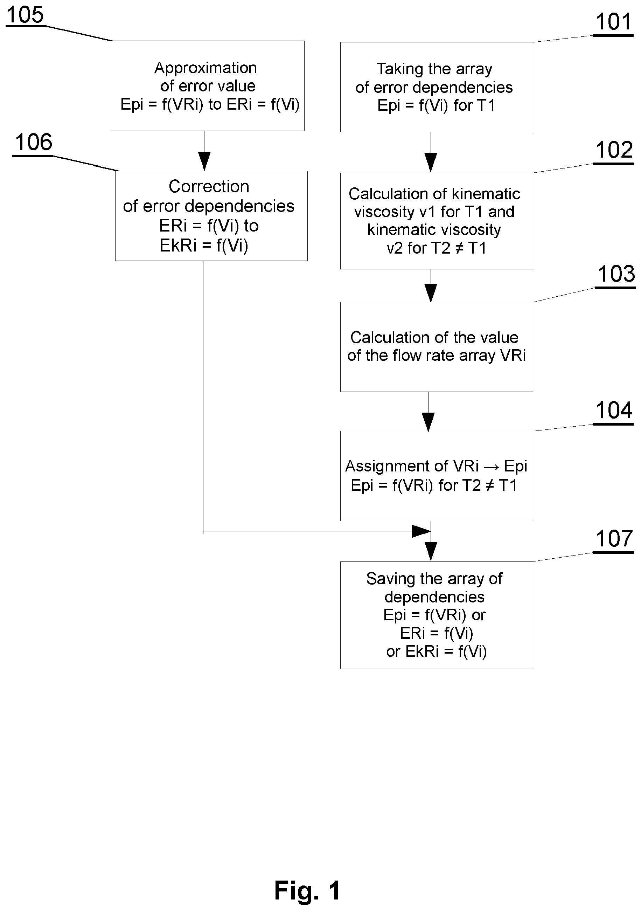

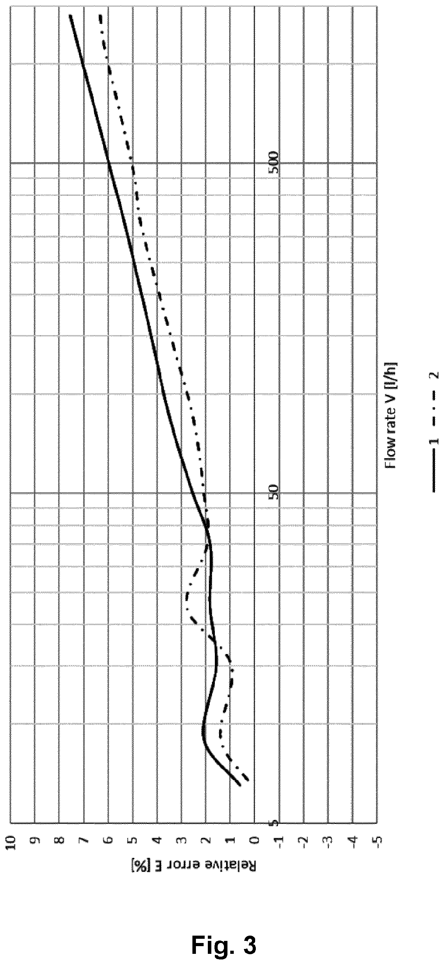

In the flow meter 205 calibration method according to the first embodiment (Fig. 1), in step 101, the array of

error dependencies $E_{pi}$ as a function of flow rate $V_i$ is taken for temperature $T_1 = 50°C$, where i = (1, 2 ..., 14). The said array of dependencies was obtained by experimental measurements using a physical meter (Fig. 3). However, it is possible to use an array obtained by computer simulation using a virtual model representing a physical meter.

Table I

| $V_i$ [l/h] | 1400.00 | 1140.00 | 900.00 | 600.00 | 435.00 | 320.00 | 150.00 |
|---|---|---|---|---|---|---|---|
| $E_{pi}(T_1)$ [%] | 7.54 | 7.24 | 6.87 | 6.24 | 5.76 | 5.28 | 4.24 |
| $V_i$ [l/h] | 85.00 | 50.00 | 35.00 | 22.50 | 15.00 | 9.00 | 6.50 |
| $E_{pi}(T_1)$ [%] | 3.49 | 2.54 | 1.82 | 1.83 | 1.57 | 2.08 | 0.60 |

Then, in step 102, values of kinematic viscosity $v_1$ for temperature $T_1$ and of kinematic viscosity $v_2$ for temperature $T_2 \neq T_1$ are calculated, the values being $v_1 = 5.54645E\text{-}07$ m$^2$/s for temperature $T_1 = 50°C$ and $v_2 = 1.20345E\text{-}06$ m$^2$/s for temperature $T_2 = 13°C$, respectively.

Then, values of flow rate array $V_{Ri}$ are calculated 103, where

$$V_{Ri} * v_1 = V_i * v_2 \qquad\qquad (1.1)$$

where: $v_1$ - kinematic viscosity for temperature $T_1$ [m$^2$/s]
$v_2$ - kinematic viscosity for temperature $T_2 \neq T_1$ [m$^2$/s]
$V_i$ - flow rate for temperature $T_1$ [l/h]
$V_{Ri}$ - flow rate for temperature $T_2$ [l/h]

In the next step 104, a corresponding error $E_{pi}$ is assigned $V_{Ri} \rightarrow E_{pi}$ to the values of the flow rate calculated in the previous step, obtaining as a result an array of error dependencies $E_{pi}$ as a function of flow rate $V_{Ri}$ for temperature $T_2 \neq T_1$ as below.

Table II

| $V_{ri}$ [l/h] | 3037.67 | 2473.53 | 1952.79 | 1301.86 | 943.85 | 694.33 | 325.47 |
|---|---|---|---|---|---|---|---|
| $E_{pi}(T_1)$ [%] | 7.54 | 7.24 | 6.87 | 6.24 | 5.76 | 5.28 | 4.24 |
| $V_{ri}$ [l/h] | 184.43 | 108.49 | 75.94 | 48.82 | 32.55 | 19.53 | 14.10 |
| $E_{pi}(T_1)$ [%] | 3.49 | 2.54 | 1.82 | 1.83 | 1.57 | 2.08 | 0.6 |

Then, for the values from the array of error dependencies $E_{pi}$ as a function of flow rate $V_{Ri}$ for temperature $T_2 \neq T_1$, where i = (1, 2 ..., 14), approximation 105, for example linear approximation, of error values for flow values $V_i$ is also made, obtaining as a result an array of error dependencies $E_{Ri}$ as a function of flow $V_i$.

$$E_{Ri} = E_{pi} + \frac{E_{pi+1} - E_{pi}}{V_{Ri+1} - V_{Ri}}(V_i - V_{Ri}) \qquad\qquad (1.2)$$

where: $E_{Ri}$ - error approximated for temperature $T_2$ [%]
$E_{pi}$ - error determined for temperature $T_2$ [%]
$V_i$ - flow rate for temperature $T_1$ [l/h]
$V_{Ri}$ - flow rate for temperature $T_2$ [l/h]

Table III

| $V_i$ [l/h] | 1400.00 | 1140.00 | 900.00 | 600.00 | 435.00 | 320.00 | 150.00 |
|---|---|---|---|---|---|---|---|
| $E_{Ri}$ [%] | 6.33 | 6.02 | 5.67 | 5.02 | 4.55 | 4.21 | 3.06 |
| $V_i$ [l/h] | 85.00 | 50.00 | 35.00 | 22.50 | 15.00 | 9.00 | 6.50 |

(continued)

| $E_{Ri}$ [%] | 2.02 | 1.83 | 1.61 | 1.96 | 0.85 | -0.75 | -2.24 |

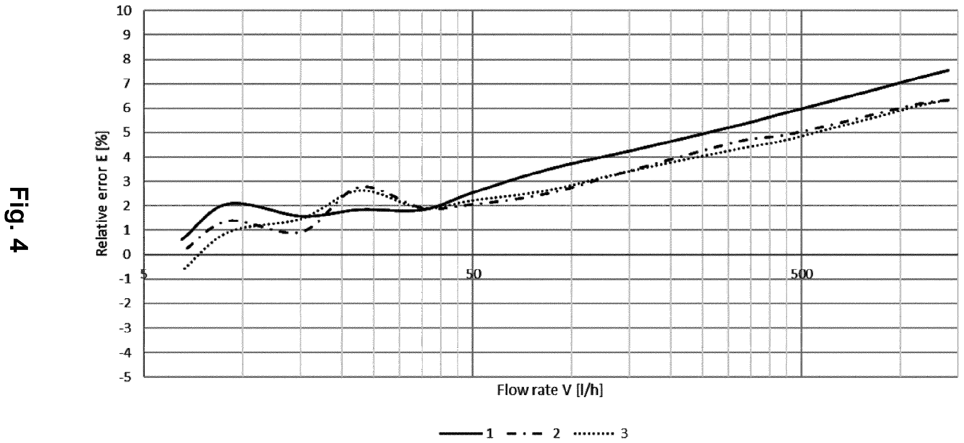

In step 106, correction of error dependency $E_{Ri}$ as a function of flow rate $V_i$ for temperature $T_2 \neq T_1$, where i = (1, 2 ..., 14) is made, with the use of a factor array obtained experimentally, obtaining as a result an array of error dependencies $E_{kRi}$ as a function of flow $V_i$. (Fig. 4). Calculation with the use of factors requires normalisation of percentage data. For example, normalisation limits of +-15% were assumed.

Normalisation:

$$E_{Rni} = \frac{E_{Ri} - E_{min}}{E_{max} - E_{min}} \tag{1.3}$$

where:

$E_{Rni}$ - error approximated, normalised for temperature $T_2$
$E_{Ri}$ - error approximated for temperature $T_2$ [%]
$E_{min}$ - minimum assumed error value [%]
$E_{max}$ - maximum assumed error value [%]

Factor correction:

$$E_{kRni} = E_{Rni} \cdot k_i \tag{1.4}$$

where:

$E_{kRni}$ - error corrected, approximated, normalised for temperature $T_2$
$E_{Rni}$ - error approximated, normalised for temperature $T_2$
$k_i$ - correction factor

Denormalisation:

$$E_{kRi} = E_{kRni} \cdot (E_{max} - E_{min}) + E_{min} \tag{1.5}$$

where:

$E_{kRni}$ - error corrected, approximated, normalised for temperature $T_2$
$E_{kRi}$ - error corrected, approximated for temperature $T_2$ [%]
$E_{min}$ - minimum assumed error value [%]
$E_{max}$ - maximum assumed error value [%]

Table IV

| $V_i$ [l/h] | 1400.00 | 1140.00 | 900.00 | 600.00 | 435.00 | 320.00 | 150.00 |
|---|---|---|---|---|---|---|---|
| $k_i$ | 0.9997 | 1.0042 | 1.0029 | 1.0058 | 1.0056 | 1.0064 | 1.0213 |
| $E_{Ri}$ [%] | 6.33 | 6.02 | 5.67 | 5.02 | 4.55 | 4.21 | 3.06 |
| $E_{kRi}$ [%] | 6.33 | 6.11 | 5.73 | 5.13 | 4.66 | 4.33 | 3.43 |
| $E_{pi}$ ($T_2$) [%] | 6.34 | 6.19 | 5.87 | 5.29 | 4.89 | 4.64 | 3.45 |
| $V_i$ [l/h] | 85.00 | 50.00 | 35.00 | 22.50 | 15.00 | 9.00 | 6.50 |
| $k_i$ | 1.0371 | 1.0243 | 1.0193 | 1.0398 | 1.0401 | 1.1184 | 1.1244 |
| $E_{Ri}$ [%] | 2.02 | 1.83 | 1.61 | 1.96 | 0.85 | -0.75 | -2.24 |

(continued)

| $E_{kRi}$[%] | 2.64 | 2.24 | 1.92 | 2.64 | 1.48 | 0.93 | -0.66 |
|---|---|---|---|---|---|---|---|
| $E_{pi}$ ($T_2$) [%] | 2.52 | 2.08 | 1.94 | 2.78 | 0.95 | 1.39 | 0.12 |

*Second embodiment of the flow meter calibration method*

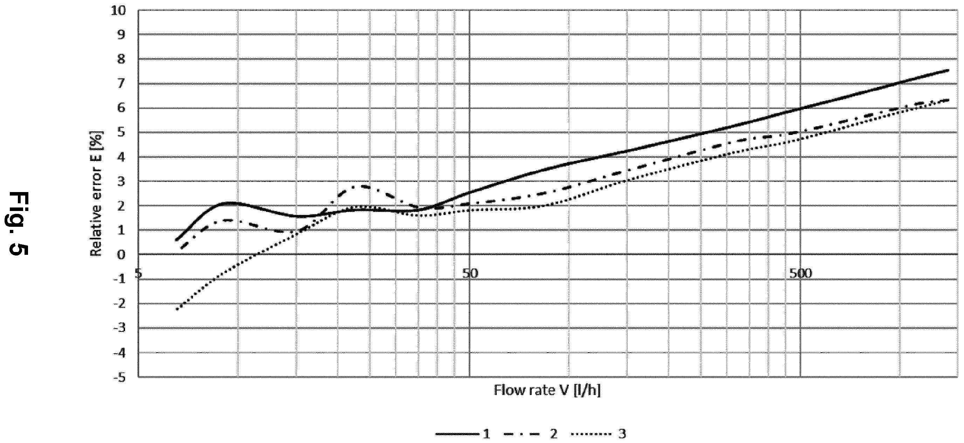

The second embodiment of the flow meter 205 calibration method is identical to the first embodiment, except that the correction 106 of error dependency $E_{Ri}$ as a function of flow rate $V_i$ for temperature $T_2 \neq T_1$ is omitted, where i = (1, 2 ..., 14) with the use a factor array obtained experimentally (Fig. 5).

*Third embodiment of the flow meter calibration method*

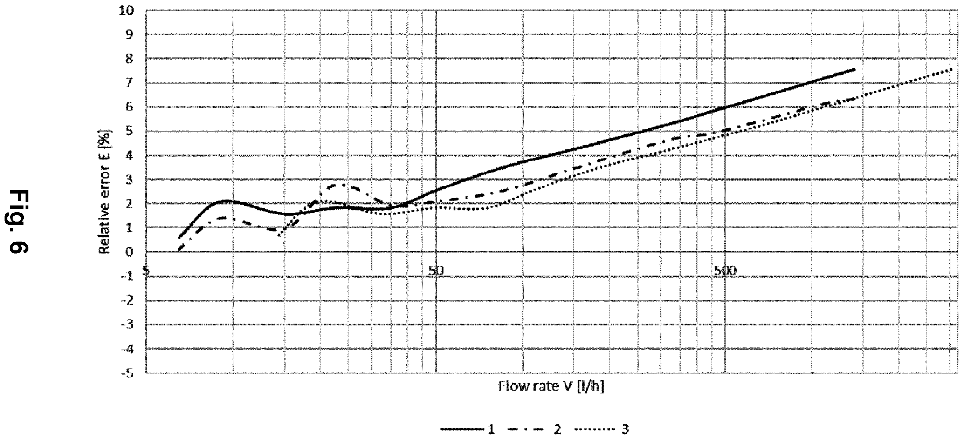

The third embodiment of the flow meter 205 calibration method is identical to the second embodiment, except that the approximation 105 of error values for flow values $V_i$ is omitted (Fig. 6).

### *System for implementing the flow meter calibration method*

The computer system for implementing the flow meter calibration method comprises a central unit 201 adapted to implement the algorithm disclosed in the above embodiments, a data bus 202 connected to the central unit 201 and to a memory 203, and a validation test bench 204 with at least one flow meter 205 contained therein, and an interface for programming the flow meter 206. The said flow meter 205 may be a physical meter or a virtual model stored in a computer system memory reflecting a physical meter. In the case of a physical flow meter, it comprises a non-volatile memory and a calculation unit capable of correcting current meter indications based on at least one correction array.

**Claims**

1. A computer- implemented method for calibrating a flow meter, including the following steps:

   - array of error dependencies $E_{pi}$ as a function of flow rate $V_i$ is taken (101) for temperature $T_1$, where i = (1, 2...,n);
   - values of kinematic viscosity $v_1$ for temperature $T_1$ and of kinematic viscosity $v_2$ for temperature $T_2 \neq T_1$ are calculated (102);
   - values of flow rate array $V_{Ri}$ are calculated (103), where $V_{Ri} * v_1 = V_i * v_2$, where i = (1, 2...,n);
   - a corresponding error $E_{pi}$ is assigned (104) $V_{Ri} \rightarrow E_{pi}$ to the values of the flow rate calculated in the previous step, obtaining as a result an array of error dependencies $E_{pi}$ as a function of flow rate $V_{Ri}$ for temperature $T_2 \neq T_1$, where i = (1,2...,n);
   - the array of dependencies from the previous step is saved (105) in the memory of the flow meter.

2. The calibration method according to claim 1 or 2, wherein the array of dependencies in step (101) is obtained by experimental measurements or by computer simulation.

3. The calibration method according to any one of the preceding claims, wherein for the values from the array of error dependencies $E_{pi}$ as a function of flow rate $V_{Ri}$ for temperature $T_2 \neq T_1$, where i = (1, 2 ..., n), approximation of error value to flow values $V_i$ is also made (105), obtaining as a result an array of error dependencies $E_{Ri}$ as a function of flow $V_i$.

4. The calibration method according to any one of the preceding claims, wherein, after step (105), correction of error dependencies $E_{Ri}$ as a function of flow rate $V_i$ is made (106) for temperature $T_2 \neq T_1$, where i = (1, 2 ..., n) with the use of a factor array obtained experimentally, obtaining as a result an array of error dependencies $E_{kRi}$ as a function of flow $V_i$.

5. A computer program comprising means of program code for performing all steps of the computer-implemented method according to any one of claims 1 to 4, when the said program is running on the computer.

6. A computer-readable medium storing computer-implemented instructions performing all steps of the computer-implemented method according to any one of claims 1 to 4 implemented on the computer.

7. A computer system for implementing the method according any one of claims 1 to 4, comprising:

   - a central unit (201) adapted to implement the calibration method,
   - a data bus (202) connected to the central unit (201) and to a memory (203),
   - a validation test bench (204) with at least one flow meter (205) contained therein comprising a non-volatile memory,
   - an interface for programming the flow meter (206).

**Patentansprüche**

1. Ein computerimplementiertes Verfahren zur Kalibrierung eines Durchflussmessers, das die folgenden Schritte umfasst:

   - wird eine Reihe von Fehlerabhängigkeiten $E_{pi}$ als Funktion der Durchflussmenge $V_i$ für die Temperatur $T_1$ genommen (101), wobei i = (1, 2...,n);
   - die Werte der kinematischen Viskosität $v_1$ für die Temperatur $T_1$ und der kinematischen Viskosität $V_2$ für die Temperatur $T_2 \neq T_1$ werden berechnet (102);
   - die Werte des Durchflussmengenfeldes $W_{Ri}$ werden berechnet (103), wobei $V_{Ri} * v_1 = V_i * v_2$, wobei i = (1, 2...,n);
   - den im vorhergehenden Schritt berechneten Werten des Durchflusses wird ein entsprechender Fehler $E_{pi}$ zugeordnet (104) $V_{Ri} \rightarrow EPi$, wodurch man als Ergebnis eine Reihe von Fehlerabhängigkeiten $E_{pi}$ als Funktion des Durchflusses $V_{Ri}$ für die Temperatur $T_2 \neq T_1$, erhält, wobei i = (1,2...,n);
   - die Reihe der Abhängigkeiten aus dem vorherigen Schritt wird im Speicher des Durchflussmessers gespeichert (105).

2. Das Kalibrierverfahren nach Anspruch 1 oder 2, wobei die Reihe der Abhängigkeiten in Schritt (101) durch experimentelle Messungen oder durch Computersimulation erhalten wird.

3. Das Kalibrierverfahren nach einem der vorhergehenden Ansprüche, wobei für die Werte aus der Reihe der Fehlerabhängigkeiten EPi in Abhängigkeit von der Durchflussmenge $V_{Ri}$ für die Temperatur $T_2 \neq T_1$, wo i = (1, 2 n) ist, auch eine Annäherung des Fehlerwertes an die Durchflusswerte $V_i$ vorgenommen wird (105), wodurch man als Ergebnis eine Reihe der Fehlerabhängigkeiten $E_{Ri}$ in Abhängigkeit vom Durchfluss $V_i$ erhält.

4. Das Kalibrierverfahren nach einem der vorhergehenden Ansprüche, wobei nach Schritt (105) eine Korrektur der Fehlerabhängigkeiten $E_{Ri}$ als Funktion des Durchflusses $V_i$ für die Temperatur $T_2 \neq T_1$, wo i = (1, 2 n) ist, unter Verwendung einer experimentell erhaltenen Faktorenreihe vorgenommen wird (106), wodurch als Ergebnis eine Reihe von Fehlerabhängigkeiten $E_{kRi}$ als Funktion des Durchflusses $V_i$ erhalten wird.

5. Computerprogramm, das Programmcodemittel zur Durchführung aller Schritte des computerimplementierten Verfahrens nach einem der Ansprüche 1 bis 4 umfasst, wenn das Programm auf dem Computer ausgeführt wird.

6. Computerlesbares Medium, das computerimplementierte Befehle speichert, die alle Schritte des computerimplementierten Verfahrens nach einem der Ansprüche 1 bis 4 auf dem Computer ausführen.

7. Computersystem zur Durchführung des Verfahrens nach einem der Ansprüche 1 bis 4, das Folgendes umfasst:

   - eine Zentraleinheit (201), die geeignet ist, das Kalibrierungsverfahren zu implementieren,
   - einen Datenbus (202), der mit der Zentraleinheit (201) und mit einem Speicher (203) verbunden ist,
   - einen Validierungsprüfstand (204) mit mindestens einem darin enthaltenen Durchflussmesser (205), der einen nichtflüchtigen Speicher aufweist,
   - eine Schnittstelle zur Programmierung des Durchflussmessers (206).

**Revendications**

1. Un procédé mis en oeuvre par ordinateur pour calibrer un débitmètre, comprenant les étapes suivantes :

   - un tableau des dépendances d'erreur $E_{pi}$ en fonction du débit $V_i$ est pris (101) pour la température $T_1$, où i =

(1, 2...,n) ;
- des valeurs de viscosité cinématique $v_1$ pour la température T1 et de viscosité cinématique $V_2$ pour la température $T_2 \neq T_1$ sont calculées (102) ;
- des valeurs du tableau de débit $W_{Ri}$ sont calculées (103), où $V_{Ri} * v_1 = V_i * v_2$, où i = (1, 2...,n);
- une erreur correspondante $E_{pi}$ est attribuée (104) $V_{Ri} \rightarrow E_{pi}$ aux valeurs du débit calculées à l'étape précédente, obtenant ainsi un tableau de dépendances d'erreur $E_{pi}$ en fonction du débit $V_{Ri}$ pour la température T2 $\neq$ T1, où i = (1,2...,n) ;
- le tableau des dépendances de l'étape précédente est enregistré (105) dans la mémoire du débitmètre.

2. Le procédé de calibrage selon la revendication 1 ou 2, dans lequel le tableau des dépendances à l'étape (101) est obtenu par des mesures expérimentales ou par simulation informatique.

3. Le procédé de calibrage selon l'une quelconque des revendications précédentes, dans lequel pour les valeurs du tableau des dépendances d'erreur EPi en fonction du débit $V_{Ri}$ pour la température T2 $\neq$ T1, où i = (1, 2 n), l'approximation de la valeur d'erreur aux valeurs de débit Vi est également effectuée (105), obtenant comme résultat un tableau des dépendances d'erreur $E_{Ri}$ en fonction du débit $V_i$.

4. Le procédé de calibrage selon l'une quelconque des revendications précédentes, dans lequel, après l'étape (105), une correction des dépendances d'erreur $E_{Ri}$ en fonction du débit $V_i$ est effectuée (106) pour la température T2 $\neq$ T1, où i = (1, 2 n) à l'aide d'un tableau de facteurs obtenu expérimentalement, obtenant comme résultat un tableau de dépendances d'erreur $E_{kRi}$ en fonction du débit $V_i$.

5. Un programme d'ordinateur comprenant des moyens de code de programme pour exécuter toutes les étapes du procédé mis en oeuvre par ordinateur selon l'une quelconque des revendications 1 à 4, lorsque ledit programme est exécuté sur l'ordinateur.

6. Un support lisible par ordinateur stockant des instructions mises en oeuvre par ordinateur exécutant toutes les étapes du procédé mis en oeuvre par ordinateur selon l'une des revendications 1 à 4 mises en oeuvre sur l'ordinateur.

7. Un système informatique pour mettre en oeuvre le procédé selon l'une quelconque des revendications 1 à 4, comprenant :

- une unité centrale (201) adaptée pour mettre en oeuvre le procédé de calibrage,
- un bus de données (202) relié à l'unité centrale (201) et à une mémoire (203),
- un banc d'essai de validation (204) avec au moins un débitmètre (205) contenu dans celui-ci et comprenant une mémoire non volatile,
- une interface pour programmer le débitmètre (206).

105

Approximation
of error value
Epi = f(VRi) to ERi = f(Vi)

101

Taking the array
of error dependencies
Epi = f(Vi) for T1

106

Correction
of error dependencies
ERi = f(Vi) to
EkRi = f(Vi)

102

Calculation of kinematic
viscosity v1 for T1 and
kinematic viscosity
v2 for T2 ≠ T1

103

Calculation of the value
of the flow rate array VRi

104

Assignment of VRi → Epi
Epi = f(VRi) for T2 ≠ T1

107

Saving the array of
dependencies
Epi = f(VRi) or
ERi = f(Vi)
or EkRi = f(Vi)

# Fig. 1

204

205

Two-way
communication

206

Programming
interface

201

Central unit

DATA BUS

203

Memory

202

**Fig. 2**

**Fig. 3**

**Fig. 4**

**Fig. 5**

Fig. 6

**EP 3 889 555 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015115761 A1
- WO 2004048906 A2
- WO 2013006090 A1
- EP 0326380 A1